Europäisches Patentamt

European Patent Office

Office européen des brevets

(19)

(11) Publication number: **0 074 210**

**A1**

(12) **EUROPEAN PATENT APPLICATION**

(21) Application number: 82304449.0

(22) Date of filing: 24.08.82

(51) Int. Cl.³: **F 16 H 47/00**
**F 16 H 41/00**

(30) Priority: 26.08.81 GB 8126047

(43) Date of publication of application:
16.03.83 Bulletin 83/11

(84) Designated Contracting States:
CH DE FR GB IT LI

(71) Applicant: Anderson, Harold Henry
14 Glen Road
Bridge of Allan Stirlingshire FK9 4PL(GB)

(71) Applicant: Ryall, Michael Leslie
Little Caldon 18 Drumbeg Loan
Killearn G63 9LG Scotland(GB)

(72) Inventor: Anderson, Harold Henry
14 Glen Road
Bridge of Allan Stirlingshire FK9 4PL(GB)

(72) Inventor: Ryall, Michael Leslie
Little Caldon 18 Drumbeg Loan
Killearn G63 9LG Scotland(GB)

(74) Representative: Arthur, John William et al,
FITZPATRICKS 48 St. Vincent Street
Glasgow G2 5TT Scotland(GB)

(54) Improved variable speed transmission.

(57) A variable speed transmission (1) for use for example in transmitting power from an electric motor drive (42) to a boiler feed pump (43), comprises mechanical gearing (2) including a slippage element, and a fluid drive system including at least one hydrostatic pump (13) driven by the slippage element and supplying power to an impulse turbine (Pelton 35) mounted integral on the transmission output shaft (6), but possibly as an alternative for constant torque operation on the input shaft (5). A spear valve (41) controls flow to the turbine. The gearing (2) is preferably a planetary gear and the slippage element can comprise the planet carrier (12) of the gear: the input (5) being via the annulus (7) and the output (6) through the sun (9) for step-up transmission or vice-versa for step-down transmission. For full output speed (100%) the pump (13) idles with no slippage and the drive is purely mechanical, but with increasing pump operation (spear valve open) and with increasing slippage the speed can fall to 70% full rate, but the turbine regains a substantial portion of the slippage power which is normally lost in conventional couplings as heat. A turbine by-pass (50) may be provided to permit lower speed operation. The above transmission (1) according to the present invention is efficient in operation, compact and of relatively simple construction, and is also economic to manufacture.

./...

*Fig.2.*

IMPROVED VARIABLE SPEED TRANSMISSION

This invention relates to variable speed transmission of the type comprising a mechanical gear system such as for example a planetary gear, including a slippage element, and fluid power means coupled to the slippage element whereby the degree of power transmitted by the fluid power means is proportional to the degree of slippage in the mechanical gear system. Thus the transmission permits transmission of the highest operating speed for a step-up or step-down gearing where the transmission operates substantially in a full mechanical mode, while for lower transmission speeds where there is increasing mechanical slippage the fluid power means plays an increasing role and serves to regain slippage energy. Such a transmission is hereinafter referred to as a variable speed transmission of the type aforesaid.

It has been previously proposed to provide a transmission comprising a combination of mechanical (gear) drive and fluid drive. In these prior transmissions a pump was drivingly coupled to an appropriate gear of the mechanical drive and supplied power fluid to a hydrostatic fluid motor which in turn was geared into the mechanical drive; and by utilising a differential type gear system in the mechanical drive it was possible for the fluid drive to play a varying role in the transmission of power. In one known system shown in U.S. patent 3534631, the input shaft of a transmission is coupled to a planet carrier of a planetary gear which has its annulus driving an output shaft, while a variable operable pump is driven from the input via a spur gear and supplies power fluid to a fluid motor which in turn is drivingly connected into the sun of the planetary gear: consequently variation of operation of the pump directly affects rotation of the sun and consequently the output speed and torque. However the fluid drive of this system is relatively complex and costly involving several pump and motor arrangements with ancillary fluid storage tanks and control valves, and additional gearing is necessary.

In another prior transmission shown in German laid-open patent specification 2902893 (OLS), the output from a driver included a sun gear which was drivingly connected to a coaxial output gear mounted on an output shaft, via lay gearing in the form of planet gears carried by a planet carrier which carrier was in turn drivingly geared to a variable output hydrostatic pump. A brake band served for selective holding of the planet carrier. The hydrostatic pump supplied pressure fluid to variable operable hydrostatic fluid motor drivingly geared to the transmissions output shaft. In operation, and with the planet carrier held by the brake band the pump was stationary and the transmission functioned in a purely mechanical mode to give full output speed, while with the brake band released slippage would occur in the gear due to rotation of the planet carrier to give reduced output speed and this resulted in operation of the pump and consequent power supply to the output shaft from the fluid motor.

The combination of fixed displacement hydrostatic pumps and variable displacement hydrostatic motors as the means for recovery of slip power had the considerable disadvantages set out below:-

1. Use of the variable displacement hydraulic motor, hydraulically connected to the pump by high pressure pipework and mechanically connected to the drive through gearing, inherently leads to severe pressure pulsations occurring in the interconnecting pipework arising from the fact that neither the hydrostatic pump nor the hydrostatic motor delivers fluid flow at a uniform rate. Attempts to reduce this problem have included the incorporation on both low pressure and high pressure sides of the hydrostatic circuit of surging vessels or gas accumulators which have proved a source of operational difficulties.

2. The variable displacement hydrostatic motors in previous systems are limited in their operational speed capability generally to less than 2,500 RPM for high power systems and this means that for high speed drives these motors must be connected by gearing to the input or output shafts, increasing the cost of the system.

3. For pump and compressor drives the output torque produced by the drive is approximately proportional to the square of the output speed. The pressure developed in the hydraulic slip power recovery system is directly proportional to this torque and therefore the variable displacement hydrostatic motors used in previous systems whose rotational speed was directly proportional to the transmission output speed were subjected to maximum hydrostatic pressure at the maximum rotational speed. This in turn resulted in the highest thrust bearing and piston loads occurring simultaneously with the highest rotational speed. Since hydrostatic motors of this type incorporate rolling element bearings this means that the life of the hydrostatic motor is seriously impaired and it was uneconomic to design a system using this prior arrangement for the kind of life required in many industrial applications, e.g. over 50,000 hours.

4. Variable displacement hydrostatic motors are comparatively complex devices and are consequently expensive.

It is the main object of the present invention to provide a variable speed transmission of the type aforesaid which obviates or mitigates these disadvantages of the prior art and which is of relatively simple construction, is compact and reliable, and is economic to manufacture.

According to the present invention there is provided a variable speed transmission comprising an input and an output, planetary gear, or a differential or other split power gear device, a fluid drive system connected between a slippage element of the gear and either of said input or output, said fluid drive system including one or more positive displacement pumps and a fluid turbine receiving power fluid from the pump, and means for controlling operation of the fluid turbine.

Preferably the pump is driven by the slippage element and the turbine drives the input or output, whereby the fluid drive system serves for recovery of slippage power.

Preferably the turbine comprises an impulse turbine, control means being provided for variation of power fluid flow to the impulse turbine for variation of turbine power input.

Preferably a spear valve is provided on the impulse turbine nozzle, to control the amount of power fluid flow to the turbine rotor, and thereby effect a speed and/or torque variation on the output shaft.

The present invention overcomes the problems of the previous hydraulic slip power recovery systems by replacing the variable displacement hydrostatic motors with a single impulse turbine mounted on or geared to the input or output shaft of the transmission, hydraulic flow to the turbine being controlled by needle or spear valve. Thus the hydraulic slip power recovery system in this invention comprises a hydrostatic pump or pumps coupled or geared to the slippage element in the gear train, the high pressure hydraulic energy developed by these pumps being recovered by the impulse turbine, apart from the hydraulic losses in the system. This combination of fixed displacement hydraulic pumps and a high pressure impulse turbine results in a system which eliminates mechanical and hydraulic difficulties previously encountered and improves overall economics.

In a preferred arrangement the gear is a planetary gear or the like and a plurality of positive displacement pumps are provided geared to the planet carrier or other slippage element of the planetary gear and arranged symmetrically there around to ensure the application of pure torque forces to the slippage element. The pumps may be of the fixed displacement or variable displacement type, depending on the operational requirements.

Preferably also, means are provided to ensure common pressure conditions in all of the pumps. These means can comprise the use of common inlet and common outlet manifolds for fluid supply to and from the pumps.

A by-pass around the positive displacement pumps may optionally be provided in some embodiments of this invention permitting low torque input at low or zero output speed, for start up purposes.

Embodiments of the present invention will now be described by way of example with reference to the accompanying drawings in which:

Fig. 1 shows in cross-sectional elevation a variable speed transmission according to one embodiment of the present invention;

Fig. 2 shows an exploded view of the transmission of Fig. 1;

Fig. 3 shows schematically a transmission similar to that of Fig. 1 but including modifications, and

Figs. 4 to 7 show schematically various other alternative forms of transmission according to the present invention.

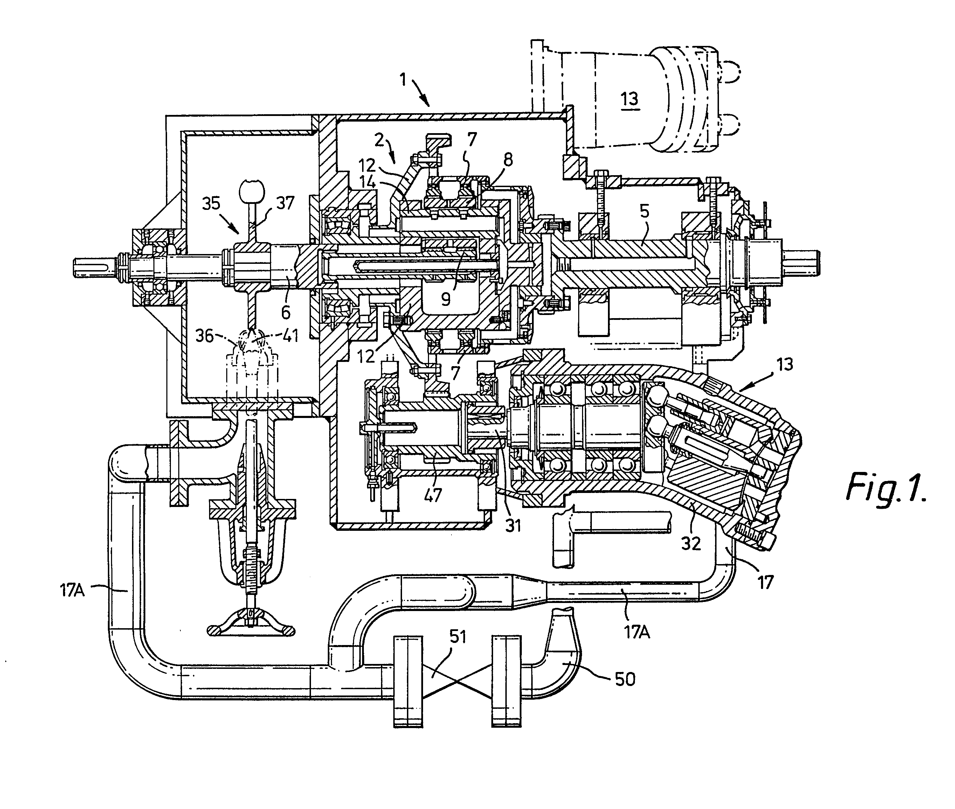

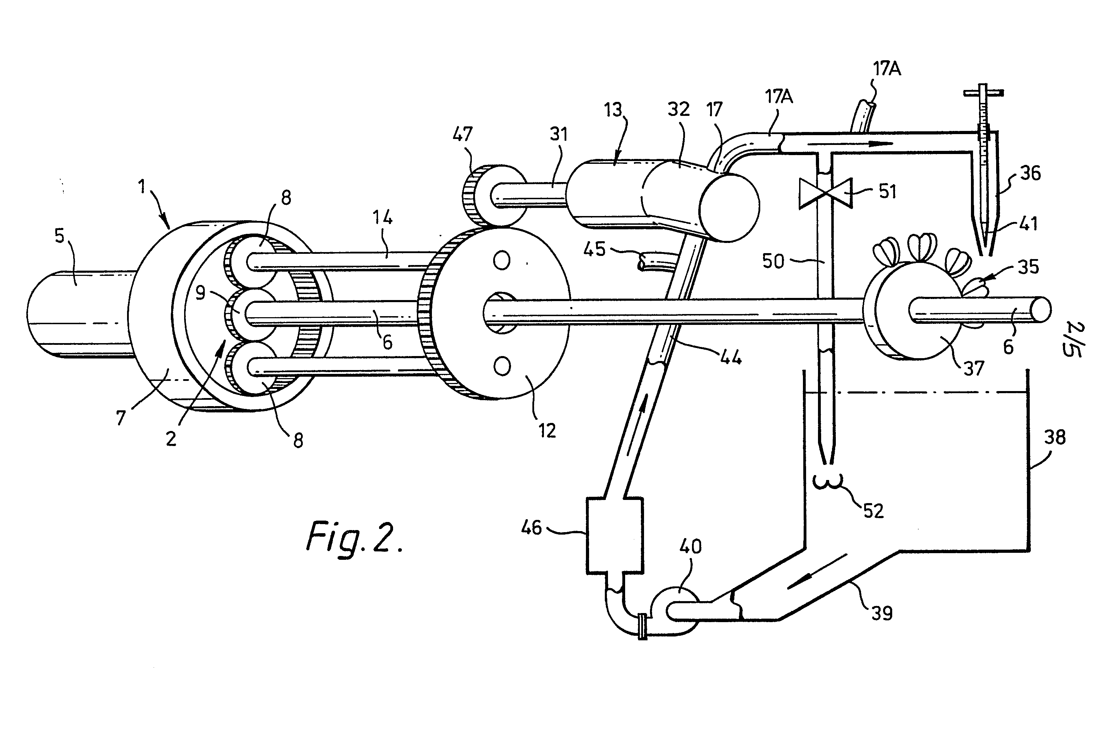

Referring to Figs. 1 and 2, a variable speed transmission 1 is provided for use for example in transmitting power from an electric motor to a boiler feed pump. . The transmission 1 includes a planetary gear 2 arranged in conventional step-up form having an input shaft 5 drivingly connected to a surrounding annulus 7, planet gears 8 meshing with a sun gear 9 and also having a planet carrier and gear ring 12, and an output shaft 6 mechanically connected to the sun gear 9.

It will be understood that the roles of the input and output shafts 5,6 may be reversed depending on the particular field of application of the transmission, i.e. whether for step-down or step-up use.

A set of one or more positive displacement pumps 13 which may be of the axial piston, screw, sliding vane or gear type but preferably of a hydrostatic bent axis type as shown in Fig. 1, is arranged around the planet carrier 12 and have their rotors 31 geared to external gearing on the planet carrier 12. In Fig. 2 the planet spindles 14 have been exaggerated in length for clarity. The casings 32 of the pumps are fixed. Preferably, the pumps 13 are arranged symmetrically so as to ensure that only pure torque forces are applied to the planet carrier 12 and, further, steps can be taken to ensure the equalising of tooth loading on the planet gear wheels 8 to enable the transmission of large powers by the planetary gear 2. For example, each pump can be coupled via a flexible coupling to its respective drive pinion 47 (Fig.2) meshing with the planet carrier 12, the pinion 47 being located between fixed journal bearings so as to permit some degree of axial float in the pinions and so that the pump is subjected to pure torque forces only.

Additionally, common pressure conditions are created in the pumps 13 for example by having the pump inlets 44 and outlets 17 connected to common inlet and outlet sources 45,17 e.g. to or from two separate manifolds. Consequently, any departure from perfect tooth and centralising geometry will be accommodated by the equalising of fluid pressure throughout the pumps 13, and the annulus 7 can be free to float on its engaging gears.

The outputs from the positive displacement pumps 13 are connected by outlet conduits 17A to the inlet or inlets 36 of the impulse turbine 35, the rotor 37 of which is rigidly fixed to the output shaft 6 of the planetary gear. The fluid is discharged from the turbine 35 to the sump 38, whence it is returned via a line 39 and drain pump 40 and cooler 46 to the manifold 45 of the positive displacement pumps 13. It is preferable that a common fluid is provided for the power fluid and the transmission lubrication fluid, a suitable fluid being a light EP oil with low viscosity and with anti-foaming additives. The turbine inlet 36 includes spear valves 41.

The transmission 1 may typically be designed for a normal operational range extending from full rated speed to a 20 or 30 per cent speed reduction or slip from the full rate value, when the impulse turbine inlet 36 is set for maximum operation (i.e. passing its full maximum flow). By suitable arrangements, however, for example by appropriate sizing of components, reduction to zero outlet speed is possible.

In this embodiment, which is particularly aimed at the variable speed drive requirements of centrifugal pumps and compressors, the positive displacement pumps 13 would be of the fixed displacement type.

For maximum output (full rate) speed from the transmission 1, the impulse turbine spear valve 41 is shut, thus preventing the positive displacement pumps 13 from rotating faster than a very slow "crawl" permitted by very small internal leakage. In this mode, no power fluid is fed to the impulse turbine 35, which simply rotates in air with insignificant losses.

To reduce transmission output speed, the spear valve 41 is progressively opened, allowing the positive displacement pumps 13 to rotate, and the planet carrier 12 to 'slip'. On opening of the spear valve 41, the high pressure fluid provides power to the impulse turbine 35. Thus the hydraulic power generated in the pumps 13 is recovered in the impulse turbine 35, apart from the relatively small turbine losses. The impulse turbine 35 can be designed to operate always close to the optimum velocity ratio.

Again to give lower speeds at starting or on other duties where efficiency is less important, a by-pass 50 (see Fig.2) is provided around each impulse turbine, by-pass flow being achieved by a suitable control valve 51 such as a spear or needle valve, and the by-pass directs the pressure fluid to a double cup or other suitable energy dissipator 52. The by-pass will enable the transmission to provide reasonably efficient operation down to 50% full rate speed, without the need for larger spear valves or a plurality thereof.

In a modification, variable displacement pumps, e.g. of the axial piston swashplate type are geared to the planet carrier 12. The pumps can be designed such that they can run at a high rotational speed, when both driven by the planet carrier rotating at full 100% slip (i.e. output shaft stationary), and when the displacement of the pumps is reduced. The variable displacement pumps would discharge via the impulse turbine spear valve 41. By suitable simultaneous control of both the pump swashplate position and the spear valve setting, a 100% variation in output speed may be achieved with virtually any desired torque characteristic, with a constant input speed, giving a versatile and efficient variable speed drive suitable for use for example in pumps, compressors, fans and conveyor belt drives. In this embodiment, by-pass valves similar to those described previously could be incorporated in the hydraulic circuit.

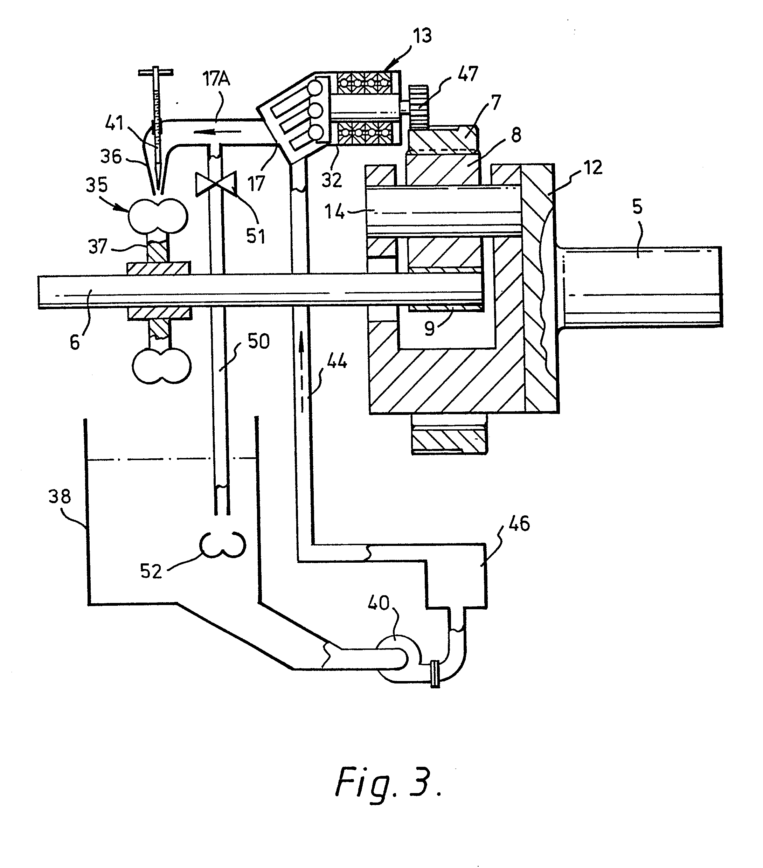

In the arrangement shown in Fig. 3, a step-up transmission is again provided but in this case the input is to the planet carrier 12 of the planetary gear 2 with the slippage drive to the hydrostatic pump 13 being via the annulus 7.

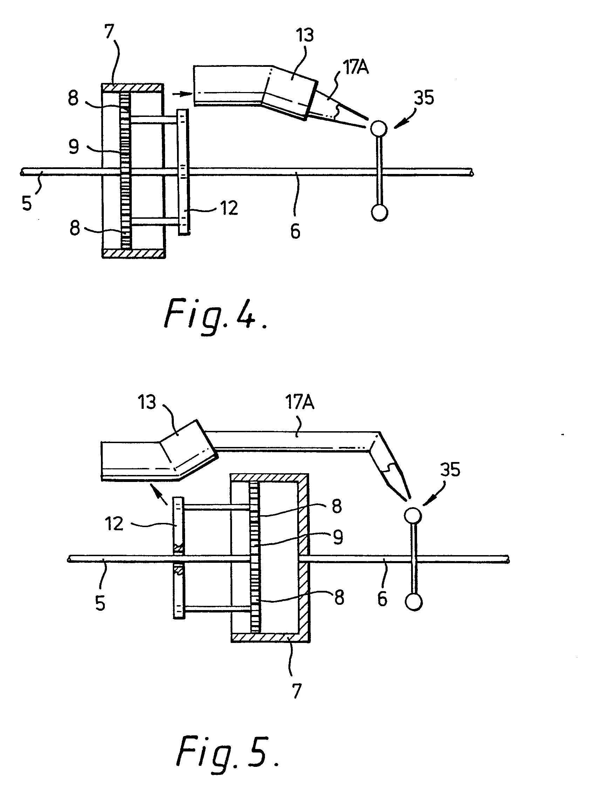

Fig. 4 shows a step-down transmission with the input to the sun 9, and the output 6 taken from the planet carrier 12, slippage of the annulus 7 driving the pumps 13 with the turbine 35 rigidly mounted on the output shaft or on a shaft geared to the output shaft.

In Fig. 5 which also shows a step-down transmission the output is via the annulus 7 with rotational slippage of the planet carrier 12 driving the pumps 13.

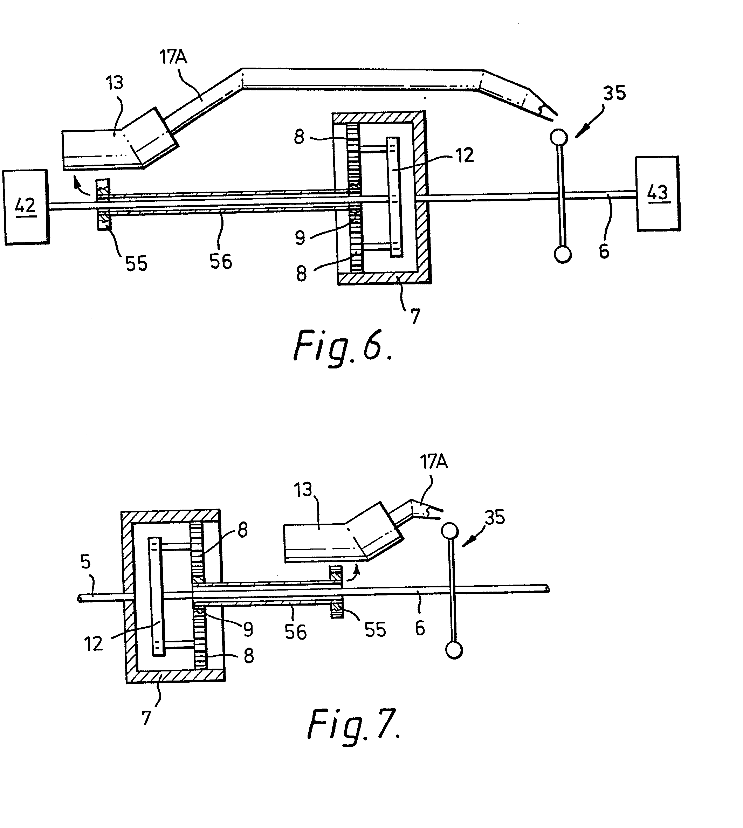

In Figs. 6 and 7, the pumps 13 are driven from the sun gear 9 and for this end a gear wheel 55 coaxial with the sun gear 9 and secured thereto by sleeve 56 meshes with the pump inputs. Fig. 6 has the input via the planet carrier 12 and the output via the annulus 7 to give speed increase, for example for equal sun and planet teeth a speed increase of 33% will be provided but as will be appreciated this can be varied by having different teeth ratios. The turbine runner is carried by the output shaft 6 or on a shaft geared thereto.

Fig. 6 shows the drive installed in a transmission from a motor 42 to a pump 43 or other driven unit.

In Fig. 7, the input and output are reversed to give equivalent speed reduction.

To suit operating parameters, and particularly for large power applications the impulse turbine can be fitted with two or more nozzles 36 in parallel, with a spear valve in each nozzle. By way of example, for a 3000 Kw drive to a boiler feed pump having a full output speed of 5000 r.p.m. the turbine rotor when mounted on the output shaft can have a mean diameter of approximately 12 ins., (305 m.m.).

The increased efficiency and improved operating characteristics of the present transmission derives from the fact that the transmission converts only slip energy to hydrostatic energy which in turn is reconverted to torque energy, and this contrasts with devices which convert all the drive energy and, with no reconversion, waste the slip power. The present device can for example have a transmission efficiency of 98 per cent at full output speed and over 90 per cent at 20 per cent slip, which contrasts with hydraulic slip loss devices such as hydraulic couplings where transmission efficiency would not exceed 78 per cent at 20% slip, with resulting larger cooling requirements and cost. It is possible for two thirds of the slip power to be recovered by the transmission.

Indeed the present transmission has an efficiency over the operating speed range approaching that of an electrical inverter drive, but the present device is considerably less costly and there are additional advantages over the inverter with regard to simplicity, weight and space requirements and potential reliability.

The above transmissions according to the present invention have the following advantages.

1. The condition under which the hydrostatic pumps operate in the slip power system are commensurate with long life i.e. maximum discharge pressure at minimum hydrostatic pump speed and correspondingly at greater slips, low discharge pressures at high pump speeds. Previous slip power recovery systems using hydrostatic motors as well as pumps have had the disadvantage that the hydrostatic motors were subjected to the highest pressure and to the highest rotational speed simultaneously, leading to short motor life. The use of the turbine as the power recovery device in this invention eliminates this problem.

2. The transmission is relatively simple, compact and reliable in operation, and is economical to manufacture.

3. The transmission avoids hydraulic system pressure surges and pulsation problems which are inherent in designs employing a combination of hydrostatic pumps and hydrostatic motors for slip power recovery: no surge tanks and the like are therefore required.

4. Considerable operational savings over hydraulic couplings are provided by the transmission particularly in installations which operate continuously for long periods such as boiler feed pumps.

5. Since the slip power is efficiently recovered, the requirements for cooling are considerably reduced, particularly so in comparison with transmissions employing an hydraulic coupling.

## CLAIMS

1.   A variable speed transmission comprising an input and an output, an epicyclic gear, or a differential or other split power gear device, a fluid drive system connected between a slippage element of the gear and either of said input or output, said fluid drive system including one or more positive displacement pumps and a fluid motor receiving power fluid from the pump, characterised in that said fluid motor comprises a turbine (35) and in that means (41) are provided for controlling operation of the turbine (35).

2.   A transmission as claimed in claim 1 characterised in that the pump (13) is driven by the slippage element (12) and the turbine (35) drives the input (5) or output (6), whereby the fluid drive system serves for recovery of slippage power.

3.   A transmission as claimed in claim 1 or 2, characterised in that the turbine (35) comprises one or more impulse turbine runners (37),control means (41) being provided for variation of power fluid flow to the impulse turbine (35) for variation of turbine power input.

4.   A transmission as claimed in claim 3, characterised in that the turbine (35) has one or more runner nozzles (36) and in that a spear valve (41) is provided in each nozzle (36) to control the amount of power fluid flow to the turbine rotor (37), and thereby effect a speed and/or torque variation on the output shaft (6).

5.   A transmission as claimed in any one of the preceding claims, characterised in that a fluid by-pass (50) is provided around the turbine (35), means (51) being provided to enable selective fluid flow through the by-pass (50) said by-pass (50) including fluid energy dissipating means (52).

6.     A transmission as claimed in any one of the preceding claims, characterised in that the turbine rotor (37) is mounted integral with the output (6) or input (5).

7.     A transmission as claimed in any one of the preceding claims, characterised in that the gear is a planetary gear (2), and in that a plurality of positive displacement pumps (13) are provided geared to a slippage element of the planetary gear (2) such as the planet carrier (12) and arranged symmetrically there around to ensure the application of pure torque forces between the gears (2) and the pumps (13).

8.     A transmission as claimed in any one of the preceding claims, characterised in that the pump (13) is a fixed displacement hydrostatic pump.

9.     A transmission as claimed in any one of claims 1 to 7, characterised in that the pump (13) is a variable displacement hydrostatic pump.

10.     A transmission as claimed in any one of the preceding claims, characterised in that means (45) are provided to ensure common pressure conditions in all of the pumps (13).

Fig.1.

Fig.2.

Fig. 3.

Fig.4.

Fig.5.

Fig.6.

Fig.7.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | F 16 H 47/00 |
| X | FR-A-2 023 052 (HOBSON) <br><br> * Pages 1,2; figures * | 1-4,6, 9,10 | F 16 H 41/00 |
| | --- | | |
| A | CH-A- 191 634 (METTLER) <br> * Page 2; figure 3 * | 1,4,8 | |
| | --- | | |
| A | DE-B-1 259 165 (THOMA) <br> * Page 1; figures * | 1,7 | |
| | --- | | |
| A | DE-B-2 337 627 (HYDROMATIC) | 1 | |
| | --- | | |
| A | US-A-3 090 253 (LINSLEY) | 1 | |
| | --- | | |
| A | DE-A-2 517 192 (KLÖCKNER) | 1 | TECHNICAL FIELDS SEARCHED (Int. Cl. ³) |
| | --- | | |
| A,D | DE-A-2 902 893 (WILLUMEIT) | 1 | F 16 H 47/00 |
| | --- | | F 16 H 41/00 |
| A,D | US-A-3 534 631 (KELLER) <br> * Column 2, figure 1 * | 1,5 | |
| | ----- | | |

The present search report has been drawn up for all claims

| Place of search <br> THE HAGUE | Date of completion of the search <br> 17-11-1982 | Examiner <br> FLORES E. |
|---|---|---|